# FASCICULE DE BREVET EUROPEEN

(11) **EP 1 645 793 B1**
(45) Date de publication et mention de la délivrance du brevet: **17.04.2013**
(21) Numéro de dépôt: 05109232.8
(22) Date de dépôt: 05.10.2005
(51) Int. Cl.: F16L 59/02, F16L 59/14

(54) **Dispositif d'isolation cryogénique**
Tieftemperaturisoliervorrichting
Cryogenic insulation device

(30) Priorité: 08.10.2004 FR 0452318
(43) Date de publication de la demande: 12.04.2006
(73) Titulaire: Cryospace l'air liquide aerospatiale, 78133 Les Mureaux Cédex (FR)
(72) Inventeur: Barbier, François, 78150, Le Chesnay (FR); Borromee, Alain, 78150, Le Chesnay (FR); Cargnello, Rémo, 78130, Les Mureaux (FR)
(74) Mandataire: Ahner, Philippe

(56) Documents cités:
- EP-A- 0 037 601
- EP-A- 1 039 211
- EP-A1- 1 279 884
- EP-A2- 0 526 363
- FR-A- 1 370 771
- FR-A1- 2 565 522
- FR-A1- 2 768 913
- FR-A1- 2 847 651
- GB-A- 1 438 226
- US-A- 3 265 236
- US-A- 3 397 720
- US-A- 4 688 603
- US-A- 5 030 518
- US-A- 6 038 867
- US-A- 6 147 579
- DAHIYA ET AL: 'Spunbond Technology' 30 Avril 2004, pages 1 - 9 Extrait de l'Internet: <URL:http://www.engr.utk.edu/mse/Textiles/S punbond%20Technology.htm> [extrait le 2012-03-12]

## Description

### DOMAINE TECHNIQUE

La présente invention se rapporte au domaine technique de l'isolation cryogénique.

La présente invention vise un dispositif d'isolation cryogénique, ainsi qu'un procédé de mise en oeuvre de ce dispositif d'isolation cryogénique.

Elle vise également une utilisation d'un tel dispositif d'isolation cryogénique pour l'isolation cryogénique d'équipements de véhicules ou d'engins spatiaux ou aéronautiques, tels que des réservoirs de carburant, afin de les protéger des échanges thermiques de convection et de rayonnement.

Elle vise enfin un lanceur équipé d'au moins un tel dispositif d'isolation.

### ÉTAT DE LA TECHNIQUE ANTÉRIEURE

De manière habituelle, certains équipements cryogéniques, telles que des réservoirs cryogéniques, sont isolés au moyen d'un dispositif d'isolation se présentant sensiblement sous la forme d'une structure comportant une ou plusieurs couches de feutre superposées, ayant une épaisseur d'environ 25 mm, et recouverte d'un revêtement de surface sur sa face destinée à être en contact avec le milieu ambiant. De manière habituelle, ce revêtement de surface est réalisé en un tissu de verre, qui est aluminisé sur chacune de ses deux faces.

Le dispositif d'isolation est maintenu sur la surface de l'équipement au moyen de pions fixés par collage.

Dans le cas d'un engin spatial ou aéronautique tel que par exemple un lanceur, on rencontre parmi les équipements cryogéniques qui doivent être isolés les réservoirs d'ergols tels que l'hydrogène liquide ou l'oxygène liquide.

La performance de l'isolation du dispositif d'isolation cryogénique dépend de l'épaisseur de la structure multicouches. En utilisation à température ambiante, le dispositif d'isolation fonctionne principalement en conduction.

Lorsqu'elle est en contact avec l'ergol liquide, la structure multicouches du dispositif d'isolation cryogénique doit être purgée par un gaz qui ne se condense pas à basse température, généralement de l'hélium, ce qui permet d'effectuer un assainissement de la paroi de l'équipement cryogénique et d'éviter que ne se produise un phénomène de cryopompage de l'air sur cette paroi qui est soumise à de très basses températures. Par conséquent, pour une utilisation de l'équipement à très basse température, par exemple à une température de l'ordre de - 253,15°C (20 K) pour un réservoir cryogénique rempli d'hydrogène liquide, les échanges thermiques mis en jeu dans le dispositif d'isolation sont principalement des échanges thermiques par convection. De plus, les échanges thermiques sont beaucoup plus importants, de l'ordre de trois fois plus importants qu'à température ambiante. Ces échanges thermiques provoquent une perte de l'ergol par évaporation. Ils provoquent également un échauffement de l'ergol liquide en début de phase de vol du de l'engin spatial ou aéronautique, tel qu'un lanceur. Cet échauffement de l'ergol liquide peut générer des dysfonctionnements des turbopompes du moteur cryogénique de l'engin. Il est donc nécessaire de limiter les échanges thermiques à travers la paroi du réservoir de telle façon que la température de l'ergol liquide contenu dans le réservoir reste inférieure à une température limite tolérée au niveau des turbopompes. A cette température limite, une masse d'ergol liquide reste dans le réservoir sans pouvoir être consommée. Il est souhaitable de réduire le plus possible la masse d'ergol liquide non consommé pour alléger le réservoir, tout en conservant une masse d'ergol liquide nécessaire au maintien d'une basse température.

Une solution pour limiter ces échanges thermiques consiste à isoler davantage le réservoir cryogénique, et donc d'augmenter l'épaisseur de la structure multicouches du dispositif d' isolation, par exemple en augmentant le nombre de couches de feutre ou en augmentant l'épaisseur de chaque couche. Mais alors surviennent un certain nombre d'inconvénients : d'une part la masse et l'encombrement du dispositif d'isolation sont fortement augmentés, et d'autre part sa fixation par l'intermédiaire de pions collés s'avère malaisée du fait de l'épaisseur accrue de la structure multicouches.
Le document US 6,038,867 décrit un dispositif d'isolation cryogénique selon le préambule de la revendication 1.

### EXPOSÉ DE L'INVENTION

La présente invention a pour but de fournir un dispositif d'isolation cryogénique qui soit plus performant que les dispositifs d'isolation cryogéniques de la technique antérieure en matière d'isolation, mais sans augmenter l'épaisseur de la structure multicouches afin d'éviter les inconvénients mentionnés ci-dessus.

Selon un premier aspect, l'invention se rapporte à un dispositif d'isolation cryogénique réalisé à partir d'un matériau composite comportant un assemblage :
- d'au moins deux couches superposées d'un matériau constitué de fibres en polyester, les fibres étant liées par un agent liant, parmi lesquelles deux couches extrêmes ayant chacune une face extérieure,
- d'au moins une couche de séparation, intercalée entre deux couches superposées successives,
- de deux couches de revêtement recouvrant chacune l'une des faces extérieures.

De préférence, les fibres en polyester sont des fibres en polyester à frisure hélicoïdale.

De manière préférée, l'agent liant est un copolymère dont l'un des monomères est de l'acétate de vinyle.

Selon le premier aspect de l'invention, la au moins une couche de séparation est une couche en polyester téréphtalate, aluminisée sur chacune de ses faces.

Selon le premier aspect de l'invention, l'une au moins des couches de revêtement est une couche en polyimide. aluminisée sur chacune de ses faces.

Selon le premier aspect de l'invention, le dispositif d'isolation cryogénique comporte, en outre, des moyens de maintien pour maintenir ensemble les couches superposées, les couches de séparation et les couches de revêtement.

Selon le premier aspect de l'invention, les moyens de maintien comportent une pluralité de trous qui traversent de part en part l'assemblage constitué des couches superposées, de la(des) couche(s) de séparation et des couches de revêtement, et une pluralité d'attaches mécaniques ayant chacune une tige disposée dans la longueur de l'un des trous traversants et deux têtes coiffant chacune une extrémité de la tige.

De préférence, les attaches mécaniques sont réalisées en matière plastique, par exemple en un polyamide.

De manière préférée, les trous traversants sont équidistants.

Selon un mode de réalisation, le dispositif d'isolation cryogénique se présente sous la forme d'au moins un panneau appliqué sur une surface d'un équipement devant être isolé.

Selon un mode de réalisation préféré, le dispositif d'isolation cryogénique se présente sous la forme d'au moins deux panneaux adjacents qui sont réunis au moyen de premiers moyens de liaison qui relient entre elles chacune des deux couches de revêtement desdits deux panneaux adjacents, et au moyen de deuxièmes moyens de liaison qui relient entre elles chacune des couches de séparation desdits deux panneaux adjacents.

De préférence, les premiers moyens de liaison sont des bandes adhésives et les deuxièmes moyens de liaison sont des bandes adhésives.

Selon un mdoe de réalisation, le dispositif d'isolation cryogénique comporte, en outre, des moyens de fixation pour sa fixation sur un équipement devant être isolé. Selon un mode de réalisation préféré des moyens de fixation, ceux-ci comportent au moins une bande auto-agrippante constituée de deux rubans qui s'agrippent l'un avec l'autre par contact, dont l'un est fixé sur l'équipement, et l'autre est fixé sur ledit dispositif d'isolation cryogénique.

Selon un deuxième aspect, l'invention se rapporte à un procédé de mise en oeuvre d'un dispositif d'isolation cryogénique selon le premier aspect de l'invention, caractérisé en ce qu'il comporte les étapes successives suivantes :
- une étape de préparation de la surface sur laquelle doit être appliqué le dispositif d'isolation cryogénique,
- une étape de protection au cours de laquelle on applique sur la surface ainsi préparée un primaire d'accrochage,
- une première étape de fixation au cours de laquelle on colle l'un des rubans d'au moins une bande auto-agrippante au moyen d'un matériau adhésif apte à supporter des températures cryogéniques, sur ladite surface préalablement préparée et protégée, en des emplacements appropriés,
- une deuxième étape de fixation au cours de laquelle on colle l'autre des rubans d'au moins une bande auto-agrippante au moyen d'un matériau adhésif apte à supporter des températures cryogéniques, sur l'une des couches de revêtement dudit dispositif d'isolation cryogénique, en des emplacements appropriés.

Le procédé de mise en oeuvre selon le deuxième aspect de l'invention comporte, en outre, une troisième étape de fixation, au cours de laquelle on applique ledit dispositif d'isolation cryogénique sur ladite surface, en faisant s'agripper entre eux lesdits deux rubans de ladite au moins une bande auto-agrippante.

Selon un troisième aspect, l'invention se rapporte à un lanceur équipé d'au moins un dispositif d'isolation cryogénique selon le premier aspect de l'invention.

Selon un quatrième aspect, l'invention se rapporte à une utilisation d'un dispositif d'isolation cryogénique selon le premier aspect de l'invention, pour l'isolation d'un réservoir cryogénique d'un engin spatial ou aéronautique.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1 illustre, en vue en perspective, un fond de réservoir cryogénique d'un lanceur spatial, partiellement recouvert d'un dispositif d'isolation cryogénique ;
- la figure 2 est une vue en coupe longitudinale d'un panneau constitutif d'un dispositif d'isolation cryogénique ; et
- la figure 3 illustre en coupe transversale et en vue agrandie la réunion de deux panneaux et la fixation d'un dispositif d'isolation cryogénique selon l'invention sur le fond du réservoir.

### EXPOSÉ DÉTAILLÉ DE MODES DE RÉALISATION PARTICULIERS

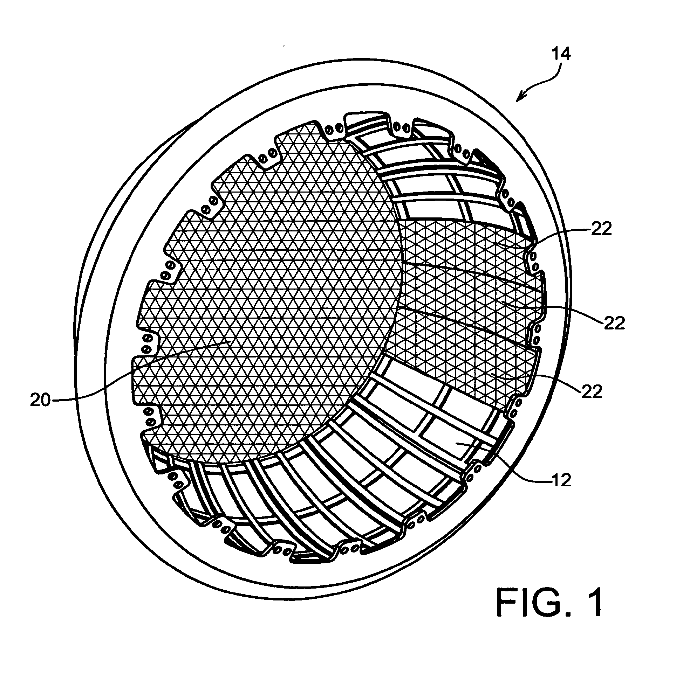

En se référant tout d'abord à la figure 1, il est représenté un fond 12 d'un réservoir cryogénique 14 d'un lanceur spatial.

Ce fond 12 présente sensiblement une forme concave. Il est partiellement recouvert d'un dispositif d'isolation cryogénique 20 selon le premier aspect de l'invention.

Ce dispositif d'isolation cryogénique 20 se présente, sur l'exemple illustré, sous la forme de plusieurs panneaux 22 de formes et de dimensions adaptées qui sont assemblés entre eux et fixés sur la paroi 12 du réservoir cryogénique 14.

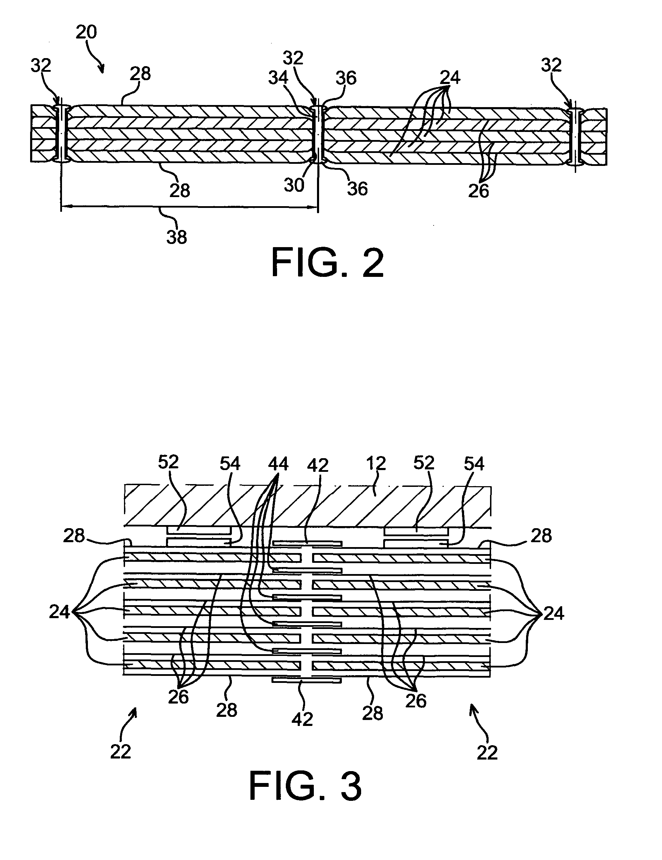

La figure 2 illustre plus en détail l'un de ces panneaux 22, vu en coupe longitudinale.

Sur l'exemple illustré plus en détail à la figure 2, les panneaux 22 du dispositif d'isolation cryogénique 20 selon le premier aspect de l'invention comportent cinq couches superposées 24 d'un matériau constitué de fibres en polyester liées par un agent liant, parmi lesquelles deux couches extrêmes ayant chacune une face extérieure. Ces couches superposées 24 sont séparées par une couche de séparation 26, intercalée entre deux couches superposées 24 successives. Chacune des deux couches extrêmes est recouverte d'une couche de revêtement 28.

De manière préférée, l'agent liant est un copolymère ayant comme monomère principal de l'acétate de vinyle ajouté aux fibres de polyester dans une proportion allant sensiblement de 15% à 25%. De manière plus préférée, cette proportion est sensiblement égale à 20%.

Selon un mode de réalisation, on peut utiliser en tant que matériau constitué de fibres en polyester un matériau connu sous la dénomination DACRON 88 (marque déposée) disponible auprès de la société DUFLOT.

De manière préférée, chacune des couches superposées 24 présente une épaisseur allant sensiblement de 10 mm à 20 mm. De manière plus préférée, cette épaisseur est sensiblement égale à 15 mm.

De manière préférée, chacune des couches superposées 24 présente une masse surfacique allant sensiblement de 140 g/m² à 160 g/m². De manière plus préférée, cette masse surfacique est sensiblement égale à 150 g/m².

Selon le premier aspect de l'invention, chaque couche de séparation 26 est une couche en polyester téréphtalate, comme par exemple un matériau connu sous la dénomination MYLAR (marque déposée) disponible auprès de la société MICEL. Selon le premier aspect de l'invention, cette couche en polyester téréphtalate est aluminisée sur chacune de ses faces. La présence de ces couches de séparation 26 confère au dispositif d'isolation cryogénique 20 une structure stratifiée qui contribue notablement à réduire les échanges thermiques par convection.

De manière optionnelle, une couche de tulle est accolée à la couche de séparation 26 en polyester téréphtalate.

De manière préférée, chaque couche de séparation 26 présente une épaisseur allant sensiblement de 10 micromètres à 15 micromètres. De manière plus préférée, cette épaisseur est sensiblement égale à 12 micromètres.

De manière préférée, chaque couche de séparation 26 présente une masse surfacique allant sensiblement de 15 g/m² à 20 g/m². De manière plus préférée, cette masse surfacique est sensiblement égale à 17 g/m².

Selon le premier aspect de l'invention, l'une au moins desdites deux couches de revêtement ou, de préférence, chaque couche de revêtement 28 est une couche en polyimide, comme par exemple un matériau connu sous la dénomination KAPTON (marque déposée), disponible auprès de la société MICEL. Selon le premier aspect de l'invention, cette couche en polyimide est aluminisée sur chacune de ses faces.

De manière préférée, chaque couche de revêtement 28 présente une épaisseur allant sensiblement de 40 micromètres à 60 micromètres. De manière plus préférée, cette épaisseur est sensiblement égale à 50 micromètres.

De préférence, chaque couche de revêtement 28 présente une masse surfacique sensiblement inférieure à 80 g/m².

Le dispositif d'isolation cryogénique 20 comporte, en outre, des moyens de maintien 30, 32 des couches superposées 24 entre elles ainsi qu'avec les couches de séparation 26 et avec les couches de revêtement 28.

Les moyens de maintien 30, 32 comportent une pluralité de trous 30 qui traversent de part en part l'assemblage constitué des couches superposées 24, des couches de séparation 26 et des couches de revêtement 28. Les moyens de maintien 30, 32 comportent également une pluralité d'attaches mécaniques 32 ayant chacune une tige 34 disposée dans la longueur de l'un des trous traversants 30 et deux têtes 34 coiffant chacune une extrémité de la tige 32.

De préférence, les attaches mécaniques 32 sont réalisées en matière plastique, par exemple en un polyamide tel que du NYLON (marque déposée). On peut utiliser des attaches de 50 mm de longueur, disponibles auprès de la société AVERY FASTENER.

De manière préférée, les trous traversants 30 sont équidistants, en étant espacés les uns des autres d'une distance 38 allant sensiblement de 40 mm à 60 mm. De manière plus préférée, cette distance 38 est sensiblement égale à 50 mm. De préférence, ces trous 30 sont au nombre d'environ 50 trous par mètre carré, et présentent un diamètre de l'ordre de quelques dixièmes de millimètres, ce qui permet le passage du gaz d'assainissement destiné à assurer une purge satisfaisante du dispositif d'isolation cryogénique.

Sur l'exemple illustré à la figure 2, les deux têtes 36 des attaches mécaniques 32 reposent respectivement sur les deux couches de revêtement 28, et les tiges 34 des attaches mécaniques 32 sont légèrement plus courtes que l'épaisseur totale du dispositif d'isolation cryogénique 20, de sorte que les attaches mécaniques 32 appliquent des efforts de compression locaux sur le dispositif d'isolation cryogénique 20. Cet effet combiné avec la distance choisie entre les positions des attaches mécaniques 32 ont pour effet que les différentes couches 24, 26, 28 du dispositif d'isolation cryogénique 20 ne glissent pas les une par rapport aux autres.

L'assemblage des différents éléments constitutifs 24, 26, 28 du dispositif d'isolation cryogénique 2, au moyen des moyens de maintien 30, 32, lui confèrent une souplesse qui permet de l'appliquer sur des parois qui peuvent présenter des surfaces courbes.

Sur la figure 3 est illustrée la fixation de deux panneaux 22 du dispositif d'isolation cryogénique 20 sur une paroi 12 de réservoir cryogénique 14, selon une coupe transversale. Les différents éléments représentés sont exagérément écartés les uns des autres pour rendre plus aisée la compréhension.

Les panneaux 22 sont réunis l'un à l'autre au moyen de bandes adhésives 42 qui relient entre elles les couches de revêtement 28 respectives desdits deux panneaux 22 adjacents, et au moyen de bandes adhésives 44 qui relient entre elles les couches de séparation 26 respectives des deux panneaux 22 adjacents. En tant que bandes adhésives, on peut avantageusement utiliser une bande connue sous la dénomination Scotch 363 (marque déposée) disponible auprès de la société 3M.

Il est ainsi possible de réunir entre eux une pluralité de panneaux 22 de manière à obtenir un dispositif d'isolation cryogénique 20 s'étendant sur une surface relativement importante. De plus, le fait de relier entre elles les couches de séparation 26 de deux panneaux 22 adjacents permet d'assurer la continuité de la stratification du dispositif d'isolation cryogénique 20, et de réduire la circulation du gaz d'assainissement, afin de maintenir l'efficacité des couches de séparation 26.

D'autre part, le dispositif d'isolation cryogénique 20 ainsi obtenu par la réunion de plusieurs panneaux 22 est fixé sur la paroi 12 du réservoir 14, ou de tout autre équipement devant être isolé.

Cette fixation est effectuée par des moyens de fixation 50, comportant une pluralité de bandes auto-agrippantes constituées de deux rubans 52, 54 qui s'agrippent l'un avec l'autre par contact, dont l'un 52 est fixé sur la surface extérieure de la paroi 12 du réservoir cryogénique 14, et dont l'autre 54 est fixé sur l'une des couches de revêtement 28 d'un panneau 22 du dispositif d'isolation cryogénique 20.

En tant que bande auto-agrippante, on peut avantageusement utiliser une bande auto-agrippante connue sous la dénomination APPLIX 800 (marque déposée) disponible auprès de la société APPLIX. Celle-ci comporte un ruban astrakan 52 tissé 100 % polyamide et constitué de boucles en multifilaments en polyamide texturés, et un ruban crochets 54 tissé 100 % polyamide et ayant des crochets monofilaments en polyamide de 0,2 mm de diamètre.

Un avantage de tels moyens de fixation réside dans le fait que le dispositif d'isolation cryogénique 30 peut être aisément installé et retiré de la paroi 12 devant être thermiquement isolée.

Il a été constaté que la présence des couches de séparation 26 et leur continuité d'un panneau 22 à l'autre permet de multiplier par trois l'efficacité d'un dispositif d'isolation cryogénique 20 selon l'invention par rapport à un dispositif d'isolation cryogénique de la technique antérieure. Cela permet d'abaisser la température de l'hydrogène liquide contenu à l'intérieur d'un réservoir cryogénique 14 recouvert d'un dispositif d'isolation cryogénique 20 selon l'invention en dessous de sa température fonctionnelle.

Selon le deuxième aspect de l'invention, le procédé de mise en oeuvre d'un dispositif d' isolation cryogénique 20 comporte les étapes successives suivantes :
- une étape de préparation de la surface 12 sur laquelle doit être appliqué le dispositif d'isolation cryogénique 20,
- une étape de protection au cours de laquelle on applique sur la surface 12 ainsi préparée un primaire d'accrochage,
- une première étape de fixation au cours de laquelle on colle l'un des rubans 52, 54 d'au moins une bande auto-agrippante 50 au moyen d'un matériau adhésif apte à supporter des températures cryogéniques, sur ladite surface 12 préalablement préparée et protégée, en des emplacements appropriés,
- une deuxième étape de fixation au cours de laquelle on colle l'autre des ruban 52, 54 d'au moins une bande auto-agrippante 50 au moyen d'un matériau adhésif apte à supporter des températures cryogéniques, sur l'une des couches de revêtement 28 dudit dispositif d'isolation cryogénique 20, en des emplacements appropriés.

Le procédé de mise en oeuvre d'un dispositif d'isolation cryogénique 20 comporte en outre une troisième étape de fixation, au cours de laquelle on applique ledit dispositif d'isolation cryogénique 20 sur ladite surface, en faisant s'agripper entre eux les deux rubans 52, 54 de ladite au moins une bande auto-agrippante 50.

Des caractéristiques avantageuses du procédé sont détailles ci-dessous.

L'étape de préparation a pour objet de donner à la surface une tension superficielle suffisante pour assurer une adhérence optimale d'un primaire d'accrochage. Cette préparation peut prendre différentes formes bien connues de l'homme du métier. Par exemple, elle comporte une opération de dégraissement alcalin et une opération de décapage sulfochromique lorsque la surface est une surface en alliage d'aluminium. Puis elle comporte une opération de rinçage à l'eau déminéralisée ou une opération d'émerisage à l'aide d'un papier abrasif de grade fin, ou encore une opération de sablage au corindon de faible granulométrie.

Il est souhaitable que la durée entre l'étape de préparation et l'étape de protection soit aussi courte que possible. De préférence, cette durée est sensiblement inférieure à 8 heures.

L'étape de protection consiste à appliquer par projection un primaire d'accrochage sur la surface préalablement préparée. Cette étape de protection a pour objet d'améliorer l'adhérence du matériau adhésif utilisé ensuite pour fixer le dispositif d'isolation, et de protéger la surface sur laquelle doit être appliqué le dispositif d'isolation cryogénique.

De préférence, le primaire d'accrochage est une résine époxy. Un tel matériau présente l'avantage de conserver ses propriétés physiques jusqu'à une température d'environ -253,15°C (20 K). Par exemple, une telle résine époxy peut est un matériau référencé PZ 820/HZ820 disponible auprès de la société SODIEMA.

Il est souhaitable d'éviter que la surface qui vient d'être protégée ne soit polluée. A cet effet, la durée entre l'étape de protection et l'étape de fixation est de préférence allant sensiblement de 36 heures après la fin de la projection du primaire d'accrochage à 30 jours après la polymérisation du primaire d'accrochage.

De manière avantageuse, le primaire d'accrochage forme un film ayant une épaisseur allant sensiblement de 10 micromètres à 50 micromètres. De manière encore plus avantageuse, son épaisseur est sensiblement égale à 20 micromètres.

Le matériau adhésif est une colle de la famille des époxydes, comme par exemple une colle connue sous la dénomination ARALDITE sous la référence AY103/HY953F et disponible auprès de la société VANTICO. De préférence, ce matériau adhésif est déposé en une couche qui présente une densité de masse surfacique allant sensiblement de 150 g/m² à 200 g/m².

Une fois que les bandes auto-agrippantes 52, 54 ont été collées aux emplacements appropriés au moyen de cette colle, on les maintien en place, par exemple au moyen de bandes adhésives provisoires standard, pendant une durée nécessaire à la polymérisation de la colle, environ 36 heures, puis on retire ces bandes adhésives provisoires.

Bien entendu, l'invention n'est pas limitée aux modes de réalisation qui viennent d'être décrits.

En particulier, on pourrait envisager un dispositif d'isolation cryogénique 20 qui ne comporterait pas cinq couches 24 superposées en polyester, mais un nombre différent de couches superposées.

En particulier, les moyens de fixation 52, 54 du dispositif d'isolation cryogénique 20 sur la paroi 12 de l'équipement devant être isolé peuvent être remplacés par un collage direct du dispositif d'isolation cryogénique sur la paroi.

## Revendications

1. Dispositif d'isolation cryogénique (20) réalisé à partir d'un matériau composite comportant un assemblage :
- d'au moins deux couches superposées (24) d'un matériau constitué de fibres en polyester, lesdites fibres étant liées par un agent liant, parmi lesquelles deux couches extrêmes ayant chacune une face extérieure,
- d'au moins une couche de séparation (26), intercalé entre deux couches superposées (24) successives,
- de deux couchers de revêtement (28) recouvrant chacune l'une des faces extérieures,
qui comporte des moyens de maintien (30, 32) pour maintenir ensemble lesdites couches superposées (24), lesdites couches de séparation (26) et lesdites couches de revêtement (28), qui comportent une pluralité de trous (30) traversant de part en part l'assemblage constitué des couches superposées (24), de la(des) couches(s) de séparation (26) et des couches de revêtement (28), et une pluralité d'attaches mécaniques (32) ayant chacune une tige (34) disposée dans la longueur de l'un desdits trous traversants (30) et deux têtes (36) coiffant chacune une extrémité de ladite tige (34),
**caractérisé en ce que** ladite au moins une couche de séparation (26) est une couche en polyester téréphtalate, aluminisée sur chacune de ses faces et **en ce que** l'une au moins desdites deux couches de revêtement (28) est une couche en polyimide, aluminisée sur chacune de ses faces.

2. Dispositif d'isolation cryogénique (20) selon la revendication 1, **caractérisé en ce que** lesdites attaches mécaniques (32) sont réalisées en matière plastique.

3. Dispositif d'isolation cryogénique (20) selon la revendication 1 ou 2, **caractérisé en ce que** lesdits trous traversants (30) sont équidistants, en étant espacés les uns des autres d'une distance (38) allant sensiblement de 40 mm à 60 mm.

4. Dispositif d'isolation cryogénique (20) selon la revendication 3, **caractérisé en ce que** ladite distance (38) est sensiblement égale à 50 mm.

5. Dispositif d'isolation cryogénique (20) selon l'une quelconque des revendication 1 à 4, **caractérisé en ce que** lesdites fibres en polyester sont des fibres en polyester à frisure hélicoïdale.

6. Dispositif d'isolation cryogénique (20) selon l'une quelconque des revendications 1 à 5, **caractérisé en ce que** ledit agent liant est un copolymère ayant comme monomère principal de l'acétate de vinyle.

7. Dispositif d'isolation cryogénique (20) selon la revendication 6, **caractérisé en ce que** ledit agent liant est un copolymère d'acétate de vinyle ajouté dans une proportion sensiblement égale à 20%.

8. Dispositif d'isolation cryogénique (20) selon l'une quelconque des revendications 1 à 7, **caractérisé en ce que** chacune desdites couches superposées (24) présente une épaisseur allant sensiblement de 10 mm à 20 mm.

9. Dispositif d'isolation cryogénique (20) selon la revendication 8, **caractérisé en ce que** chacune desdites couches superposées (24) présente une épaisseur sensiblement égale à 15 mm.

10. Dispositif d'isolation cryogénique (20) selon l'une quelconque des revendications 1 à 9, **caractérisé en ce que** chacune desdites couches superposées (24) présente une masse surfacique allant sensiblement de 140 g/m² à 160 g/m².

11. Dispositif d'isolation cryogénique (20) selon la revendication 10, **caractérisé en ce que** chacune desdites couches superposées (24) présente une masse surfacique sensiblement égale à 150 g/m².

12. Dispositif d'isolation cryogénique (20) selon l'une quelconque des revendications précédentes, **caractérisé en ce que** ladite au moins une couche de séparation (26) présente une épaisseur allant sensiblement de 10 micromètres à 15 micromètres.

13. Dispositif d'isolation cryogénique (20) selon la revendication 12, **caractérisé en ce que** ladite au moins une couche de séparation (26) présente une épaisseur sensiblement égale à 12 micromètres.

14. Dispositif d'isolation cryogénique (20) selon l'une quelconque des revendications 1 à 13, **caractérisé en ce que** ladite au moins une couche de séparation (26) présente une masse surfacique allant sensiblement de 15 g/m² à 20 g/m².

15. Dispositif d'isolation cryogénique (20) selon la revendication 14, **caractérisé en ce que** ladite au moins une couche de séparation (26) présente une masse surfacique sensiblement égale à 17 g/m².

16. Dispositif d'isolation cryogénique (20) selon l'une quelconque des revendications 1 à 15, **caractérisé en ce que** lesdites couches de revêtement (28) présentent une épaisseur allant sensiblement de 40 micromètres à 60 micromètres.

17. Dispositif d'isolation cryogénique (20) selon la revendication 16, **caractérisé en ce que** lesdites couches de revêtement (28) présentent une épaisseur sensiblement égale à 50 micromètres.

18. Dispositif d'isolation cryogénique (20) selon l'une quelconque des revendications 1 à 17, **caractérisé en ce que** lesdites couches de revêtement (28) présentent une masse surfacique sensiblement inférieure à 80 g/m².

19. Dispositif d'isolation cryogénique (20) selon l'une quelconque des revendications 1 à 18, **caractérisé en ce qu'**il se présente sous la forme d'au moins un panneau (22) appliqué sur une surface d'un équipement (14) devant être isolé.

20. Dispositif d'isolation cryogénique (20) selon l'une quelconque des revendications 1 à 19, **caractérisé en ce qu'**il se présente sous la forme d' au moins deux panneaux (22) adjacents qui sont réunis au moyen de premiers moyens de liaison (42) qui relient entre elles chacune des deux couches de revêtement (28) desdits deux panneaux (22) adjacents, et au moyen de deuxièmes moyens de liaison (44) qui relient entre elles chacune des couches de séparation (26) desdits deux panneaux (22) adjacents.

21. Dispositif d'isolation cryogénique (20) selon la revendication 20, **caractérisé en ce que** les premiers moyens de liaison (42) sont des bandes adhésives et les deuxièmes moyens de liaison (44) sont des bandes adhésives.

22. Dispositif d'isolation cryogénique (20) selon l'une quelconque des revendications 1 à 21, **caractérisé en ce qu'**il comporte, en outre, des moyens de fixation (50) pour sa fixation sur un équipement (14) devant être isolé.

23. Dispositif d'isolation cryogénique (20) selon la revendication 22, **caractérisé en ce que** lesdits moyens de fixation (50) comportent au moins une bande auto-agrippante constituée de deux rubans (52, 54) qui s'agrippent l'un avec l'autre par contact, dont l'un est fixé sur l'équipement (14), et l'autre est fixé sur ledit dispositif d'isolation cryogénique (20).

24. Procédé de mise en oeuvre d' un dispositif d'isolation cryogénique (20) selon l'une quelconque des revendications 1 à 23, **caractérisé en ce qu'**il comporte les étapes successives suivantes :
- une étape de préparation de la surface (12) sur laquelle doit être appliqué le dispositif d'isolation cryogénique (20),
- une étape de protection au cours de laquelle on applique sur la surface (12) ainsi préparée un primaire d'accrochage,
- une première étape de fixation au cours de laquelle on colle l'un des rubans (52, 54) d'au moins une bande auto-agrippante (50) au moyen d'un matériau adhésif apte à supporter des températures cryogéniques, sur ladite, surface (12) préalablement préparée et protégée, en des emplacements appropriés,
- une deuxième étape de fixation au cours de laquelle on colle l'autre des rubans (52, 54) d'au moins une bande auto-agrippante (50) au moyen d'un matériau adhésif apte à supporter des températures cryogéniques, sur l'un des couches de revêtement dudit dispositif d'isolation cryogénique (20), en des emplacements appropriés.

25. Procédé de mise en oeuvre selon la revendication 24, **caractérisé en ce qu'**il comporte, en outre, une troisième étape de fixation, au cours de laquelle on applique ledit dispositif d'isolation cryogénique (20) sur ladite surfa (12), en faisant s'agripper entre eux lesdits deux rubans (52, 54) de ladite au moins une bande auto-agrippante (50).

26. Procédé de mise en oeuvre selon la revendication 24 ou 25, **caractérisé en ce que** la durée entre l'étape de préparation et l'étape de protection est sensiblement inférieure à 8 heures.

27. Procédé de mise en oeuvre selon l'une quelconque des revendications 24 à 26, **caractérisé en ce que** le primaire d'accrochage est une résine époxy.

28. Procédé de mise en oeuvre selon l'une quelconque des revendications 24 à 27, **caractérisé en ce que** le primaire d'accrochage forme un film ayant une épaisseur allant sensiblement de 10 micromètres à 50 micromètres.

29. Procédé de mise en oeuvre selon l'une quelconque des revendications 24 à 28, **caractérisé en ce que** le primaire d'accrochage forme un film dont l'épaisseur est sensiblement égale à 20 micromètres.

30. Procédé de mise en oeuvre selon l'une quelconque des revendications 24 à 29, **caractérisé en ce que** le matériau adhésif est une colle de la famille des époxydes.

31. Procédé de mise en oeuvre selon l'une quelconque des revendications 24 à 30, **caractérisé en ce que** le matériau adhésif est déposé en une couche qui présente une densité de masse surfacique allant sensiblement de 150 g/m² à 200 g/m².

32. Utilisation d'un dispositif d'insolation cryogénique (20) selon l'une quelconque des revendications 1 à 23, pour l'isolation d'un réservoir cryogénique (14) d'un engin spatial ou aéronautique.

33. Lanceur, **caractérisé en ce qu'**il est équipé d'au moins un dispositif d'isolation cryogénique (20) selon l'une quelconque des revendications 1 à 23.

## Claims

1. A cryogenic insulation device (20) made from a composition material including an assembly:
- of at least two superposed layers (24) of a material consisting of polyester fibers, said fibers being bound with a binding agent, among which two extreme layers each having an outer face,
- of at least one separation layer (26), inserted between two successive superposed layers (24),
- of two coating layers (28) each covering one of the outer faces,
which includes holding means (30, 32) for holding together said superposed layers (24), said separation layers (26) and said coating layers (28), which include a plurality of holes (30) passing right through the assembly consisting of the superposed layers (24), of the separation layer(s) (26) and on the coating layers (28), and a plurality of mechanical ties (32) each having a rod (34) positioned in the length of one of said through-holes (30) and two heads (36) each capping an end of said rod (34),
**characterized in that** said at least one separation layer (26) is a layer of terephthalate polyester, aluminized on each of its faces and **in that** at least one of said two coating layers (28) is a polyimide layer, aluminized on each of its faces.

2. The cryogenic insulation device (20) according to claim 1, **characterized in that** said mechanical ties (32) are made in plastic material.

3. The cryogenic insulation device (20) according to claim 1 or 2, **characterized in that** said through-holes (30) are equidistant, while being spaced apart from each other by a distance (38) substantially ranging from 40 mm to 60 mm.

4. The cryogenic insulation device (20) according to claim 3, **characterized in that** said distance (38) is substantially equal to 50 mm.

5. The cryogenic insulation device (20) according to any of claims 1 to 4, **characterized in that** said polyester fibers are polyester fibers with a helical crimp.

6. The cryogenic insulation device (20) according to any of claims 1 to 5, **characterized in that** said binding agent is a copolymer having vinyl acetate as a main monomer.

7. The cryogenic insulation device (20) according to claim 6, **characterized in that** said binding agent is a vinyl acetate copolymer added in a proportion substantially equal to 20%.

8. The cryogenic insulation device (20) according to any of claims 1 to 7, **characterized in that** each of said superposed layers (24) has a thickness substantially ranging from 10 mm to 20 mm.

9. The cryogenic insulation device (20) according to claim 8, **characterized in that** each of said superposed layers (24) has a thickness substantially equal to 15 mm.

10. The cryogenic insulation device (20) according to any of claims 1 to 9, **characterized in that** each of said superposed layers (24) has a basis weight substantially ranging from 140 g/m² to 160 g/m².

11. The cryogenic insulation device (20) according to claim 10, **characterized in that** each of said superposed layers (24) has a basis weight substantially equal to 150 g/m² .

12. The cryogenic insulation device (20) according to any of the preceding claims, **characterized in that** said at least one separation layer (26) has a thickness substantially ranging from 10 micrometers to 15 micrometers.

13. The cryogenic insulation device (20) according to claim 12, **characterized in that** said at least one separation layer (26) has a thickness substantially equal to 12 micrometers.

14. The cryogenic insulation device (20) according to any of claims 1 to 13, **characterized in that** said at least one separation layer (26) has a basis weight substantially ranging from 15 g/m² to 20 g/m².

15. The cryogenic insulation device (20) according to claim 14, **characterized in that** said at least one separation layer (26) has a basis weight substantially equal to 17 g/m².

16. The cryogenic insulation device (20) according to any of claims 1 to 15, **characterized in that** said coating layers (28) have a thickness substantially ranging from 40 micrometers to 60 micrometers.

17. The cryogenic insulation device (20) according to claim 16, **characterized in that** said coating layers (28) have a thickness substantially equal to 50 micrometers.

18. The cryogenic insulation device (20) according to any of claims 1 to 17, **characterized in that** said coating layers (28) have a basis weight substantially less than 80 g/m².

19. The cryogenic insulation device (20) according to any of claims 1 to 18, **characterized in that** it appears in the form of at least one panel (22) applied on a surface of a piece of equipment (14) which has to be insulated.

20. The cryogenic insulation device (20) according to any of claims 1 to 19, **characterized in that** it appears in the form of at least two adjacent panels (22) which are joined by means of first connecting means (42) which connect together each of the two coating layers (28) of said two adjacent panels (22), and by means of second connecting means (44) which connect together each of the separation layers (26) of said two adjacent panels (22).

21. The cryogenic insulation device (20) according to claim 20, **characterized in that** the first connecting means (42) are adhesive tapes and the second connecting means (44) are adhesive tapes.

22. The cryogenic insulation device (20) according to any of claims 1 to 21, **characterized in that** it further includes attachment means (50) for its attachments on a piece of equipment (14) which has to be insulated.

23. The cryogenic insulation device (20) according to claim 22, **characterized in that** the said attachment means (50) include at least one self-clinging tape consisting of two ribbons (52, 54) which cling to each other by contact, one of which is attached on the piece of equipment (14), and the other one is attached on said cryogenic insulation device (20).

24. A method for applying a cryogenic insulation device (20) according to any of claims 1 to 23, **characterized in that** it includes the following successive steps:
- a step for preparing the surface (12) on which the cryogenic insulation device (20) has to be applied,
- a protective step during which an adhesion primer is applied on the thereby prepared surface (12),
- a first attachment step during which one of the ribbons (52, 54) of at least one self-clinging tape (50) is adhesively bonded by means of an adhesive material capable of supporting cryogenic temperatures, on said surface (12) prepared and protected beforehand, in suitable locations,
- a second attachment step during which the other one of the ribbons (52, 54) of at least one self-clinging tape (50) is adhesively bonded by means of an adhesive material capable of supporting cryogenic temperatures, on one of the coating layers of the cryogenic insulation, device (20), in suitable locations.

25. The application method according to claim 24, **characterized in that** it further includes a third attachment step, during which said cryogenic insulation device (20) is applied on said surface (12) by having said two ribbons (52, 54) of said at least one self-clinging tape (50) cling together.

26. The application method according to claim 24 or 25, **characterized in that** the period of time between the preparation step and the protective step is substantially less than 8 hours.

27. The application method according to any of claims 24 to 26, **characterized in that** the adhesion primer is an epoxy resin.

28. The application method according to any of claims 24 to 27, **characterized in that** the adhesion primer forms a film having a thickness substantially ranging from 10 micrometers to 50 micrometers.

29. The application method according to any of claims 24 to 28, **characterized in that** the adhesion primer forms a film, the thickness of which is substantially equal to 20 micrometers.

30. The application method according to any of claims 24 to 29, **characterized in that** the adhesive material is glue from the family of epoxides.

31. The application method according to any of claims 24 to 30, **characterized in that** the adhesive material is deposited in a layer which has a surface mass density substantially ranging from 150 g/m² to 200 g/m².

32. The use of a cryogenic insulation device (20) according to any of claims 1 to 23, four insulating a cryogenic tank (14) of a spacecraft or an aeronautical craft.

33. A launcher, **characterized in that** it is equipped with at least one cryogenic insulation (20) according to any of claims 1 to 23.

## Patentansprüche

1. Tieftemperaturisoliervorrichtung (20), die aus einem Verbundmaterial ausgeführt ist, umfassend eine Anordnung:
- von mindestens zwei überlagerten Schichten (24) aus einem aus Polyesterfasern gebildeten Material, wobei die Fasern durch ein Bindemittel verbunden sind, wobei von diesen zwei äußerste Schichten jeweils eine Außenfläche aufweisen,
- von mindestens einer Trennschicht (26), die zwischen zwei aufeinanderfolgende überlagerte Schichten (24) eingefügt ist,
- von zwei Überzugsschichten (28), die jeweils eine der Außenflächen bedecken,
die Haltemittel (30, 32) zum Zusammenhalten der überlagerten Schichten (24), der Trennschichten (26) und der Überzugsschichten (28) aufweist, die mehrere Löcher (30), die durch die von den überlagerten Schichten (24), der Trennschicht bzw. den Trennschichten (26) und den Überzugsschichten (28) gebildete Anordnung hindurchgehen, und mehrere mechanische Befestigungen (32), die jeweils einen Stift (34), der sich in der Länge von einem der durchgehenden Löcher (30) befindet, und zwei Köpfe (36), die jeweils ein Ende des Stifts (34) bedecken, aufweisen, umfassen,
**dadurch gekennzeichnet, dass** die mindestens eine Trennschicht (26) eine Polyesterterephthalatschicht ist, die auf jeder ihrer Flächen aluminiert ist, und dass mindestens eine der beiden Überzugsschichten (28) eine Polyimidschicht ist, die auf jeder ihrer Flächen aluminiert ist.

2. Tieftemperaturisoliervorrichtung (20) nach Anspruch 1, **dadurch gekennzeichnet, dass** die mechanischen Befestigungen (32) aus einem Kunststoffmaterial ausgeführt sind.

3. Tieftemperaturisoliervorrichtung (20) nach Anspruch 1 oder 2, **dadurch gekennzeichnet, dass** die durchgehenden Löcher (30) äquidistant sind, wobei sie voneinander mit einem Abstand (38), der im Wesentlichen von 40 mm bis 60 mm geht, beabstandet sind.

4. Tieftemperaturisoliervorrichtung (20) nach Anspruch 3, **dadurch gekennzeichnet, dass** der Abstand (38) im Wesentlichen gleich 50 mm ist.

5. Tieftemperaturisoliervorrichtung (20) nach einem der Ansprüche 1 bis 4, **dadurch gekennzeichnet, dass** die Polyesterfasern Polyesterfasern mit schraubenförmiger Kräuselung sind.

6. Tiefternperaturisoiiervorrichtung (20) nach einem der Ansprüche 1 bis 5, **dadurch gekennzeichnet, dass** das Bindemittel ein Copolymer ist, das als Hauptmonomer Vinylacetat aufweist.

7. Tieftemperaturisoliervorrichtung (20) nach Anspruch 6, **dadurch gekennzeichnet, dass** das Bindemittel ein Vinylacetat-Copolymer ist, das in einem Anteil von im Wesentlichen gleich 20 % zugegeben ist.

8. Tieftemperaturisoliervorrichtung (20) nach einem der Ansprüche 1 bis 7, **dadurch gekennzeichnet, dass** jede der überlagerten Schichten (24) eine Dicke aufweist, die im Wesentlichen von 10 mm bis 20 mm geht.

9. Tieftemperaturisoliervorrichtung (20) nach Anspruch 8, **dadurch gekennzeichnet, dass** jede der überlagerten Schichten (24) eine Dicke aufweist, die im Wesentlichen gleich 15 mm ist.

10. Tieftemperaturisoliervorrichtung (20) nach einem der Ansprüche 1 bis 9, **dadurch gekennzeichnet, dass** jede der überlagerten Schichten (24) eine flächenbezogene Masse aufweist, die im Wesentlichen von 140 g/m² bis 160 g/m² geht.

11. Tieftemperaturisoliervorrichtung (20) nach Anspruch 10, **dadurch gekennzeichnet, dass** jede der überlagerten Schichten (24) eine flächenbezogene Masse aufweist, die im Wesentlichen gleich 150 g/m² ist.

12. Tieftemperaturisoliervorrichtung (20) nach einem der vorhergehenden Ansprüche, **dadurch gekennzeichnet, dass** die mindestens eine Trennschicht (26) eine Dicke aufweist, die im Wesentlichen von 10 µm bis 15 µm geht.

13. Tieftemperaturisoliervorrichtung (20) nach Anspruch 12, **dadurch gekennzeichnet, dass** die mindestens eine Trennschicht (26) eine Dicke aufweist, die im Wesentlichen gleich 12 µm ist.

14. Tieftemperaturisoliervorrichtung (20) nach einem der Ansprüche 1 bis 13, **dadurch gekennzeichnet, dass** die mindestens eine Trennschicht (26) eine flächenbezogene Masse aufweist, die im Wesentlichen von 15 g/m² bis 20 g/m² geht.

15. Tieftemperaturisoliervorrichtung (20) nach Anspruch 14, **dadurch gekennzeichnet, dass** die mindestens eine Trennschicht (26) eine flächenbezogene Masse aufweist, die im Wesentlichen gleich 17 g/m² ist.

16. Tieftemperaturisoliervorrichtung (20) nach einem der Ansprüche 1 bis 15, **dadurch gekennzeichnet, dass** die Überzugsschichten (28) eine Dicke aufweisen, die im Wesentlichen von 40 µm bis 60 µm geht.

17. Tieftemperaturisoliervorrichtung (20) nach Anspruch 16, **dadurch gekennzeichnet, dass** die Überzugsschichten (28) eine Dicke aufweisen, die im Wesentlichen gleich 50 µm ist.

18. Tieftemperaturisoliervorrichtung (20) nach einem der Ansprüche 1 bis 17, **dadurch gekennzeichnet, dass** die Überzugsschichten (28) eine flächenbezogene Masse aufweisen, die im Wesentlichen geringer als 80 g/m² ist.

19. Tieftemperaturisoliervorrichtung (20) nach einem der Ansprüche 1 bis 18, **dadurch gekennzeichnet, dass** sie in der Form von mindestens einer Platte (22), die auf eine Oberfläche einer Einrichtung (14), bevor diese isoliert wurde, appliziert wird, vorhanden ist.

20. Tieftemperaturisoliervorrichtung (20) nach einem der Ansprüche 1 bis 19, **dadurch gekennzeichnet, dass** sie in der Form von mindestens zwei angrenzenden Platten (22) vorhanden ist, die mittels erster Verbindungsmittel (42), die jede der zwei Überzugsschichten (28) der angrenzenden zwei Platten (22) miteinander verbinden, und mittels zweiter Verbindungsmittel (44), die jede der Trennschichten (26) der beiden angrenzenden Platten (22) miteinander verbinden, verbunden sind.

21. Tieftemperaturisoliervorrichtung (20) nach Anspruch 20, **dadurch gekennzeichnet, dass** die ersten Verbindungsmittel (42) Klebestreifen sind und die zweiten Verbindungsmittel (44) Klebstreifen sind.

22. Tieftemperaturisoliervorrichtung (20) nach einem der Ansprüche 1 bis 21, **dadurch gekennzeichnet, dass** sie ferner Befestigungsmittel (50) für deren Befestigung an einer Einrichtung (14), bevor diese isoliert wurde, aufweist.

23. Tieftemperaturisoliervorrichtung (20) nach Anspruch 22, **dadurch gekennzeichnet, dass** die Befestigungsmittel (50) mindestens ein Klettband aufweisen, das aus zwei Streifen (52, 54) gebildet wird, die sich durch Kontakt aneinander festhalten, wobei der eine an der Einrichtung (14) befestigt ist und der andere an der Tieftemperaturisoliervorrichtung (20) befestigt ist.

24. Verfahren zur Verwendung einer Tieftemperaturisoliervorrichtung (20) nach einem der Ansprüche 1 bis 23, **dadurch gekennzeichnet, dass** es die folgenden aufeinanderfolgenden Schritte umfasst:
- einen Schritt zur Vorbereitung der Oberfläche (12), auf die die Tieftemperaturisoliervorrichtung (20) aufzubringen ist,
- einen Schritt des Schützens, im Verlaufe dessen auf die so vorbereitete Oberfläche (12) ein Haftgrund appliziert wird,
- einen ersten Befestigungsschritt, im Verlaufe dessen einer der Streifen (52, 54) von mindestens einem Klettband (50) mittels eines Klebstoffs, der Tieftemperaturtemperaturen aushalten kann, auf die zuvor vorbereitete und geschützte Oberfläche (12) an geeigneten Stellen geklebt wird,
- einen zweiten Befestigungsschritt, im Verlaufe dessen der andere der Streifen (52, 54) von mindestens einem Klettband (50) mittels eines Klebstoffs, der Tieftemperaturtemperaturen aushalten kann, auf eine der Überzugsschichten der Tieftemperaturisoliervorrichtung (20) an geeigneten Stellen geklebt wird.

25. Verfahren zur Verwendung nach Anspruch 24, **dadurch gekennzeichnet, dass** es ferner einen dritten Befestigungsschritt aufweist, im Verlaufe dessen die Tieftemperaturisoliervorrichtung (20) auf die Oberfläche (12) appliziert wird, wobei sich die beiden Streifen (52, 54) des mindestens einen Klettbands (50) aneinander festhalten.

26. Verfahren zur Verwendung nach Anspruch 24 oder 25, **dadurch gekennzeichnet, dass** die Zeitspanne zwischen dem Vorbereitungsschritt und dem Schutzschritt im Wesentlichen geringer als 8 h ist.

27. Verfahren zur Verwendung nach einem der Ansprüche 24 bis 26, **dadurch gekennzeichnet, dass** der Haftgrund ein Epoxyharz ist.

28. Verfahren zur Verwendung nach einem der Ansprüche 24 bis 27, **dadurch gekennzeichnet, dass** der Haftgrund einen Film bildet, der eine Dicke aufweist, die im Wesentlichen von 10 µm bis 50 µm geht.

29. Verfahren zur Verwendung nach einem der Ansprüche 24 bis 28, **dadurch gekennzeichnet, dass** der Haftgrund einen Film bildet, dessen Dicke im Wesentlichen gleich 20 µm ist.

30. Verfahren zur Verwendung nach einem der Ansprüche 24 bis 29, **dadurch gekennzeichnet, dass** der Klebstoff ein Kleber der Epoxidfamilie ist.

31. Verfahren zur Verwendung nach einem der Ansprüche 24 bis 30, **dadurch gekennzeichnet, dass** der Klebstoff in einer Schicht abgelagert wird, die eine Dichte einer flächenbezogenen Masse aufweist, die im Wesentlichen von 150 g/m² bis 200 g/m² geht.

32. Verwendung einer Tieftemperaturisoliervorrichtung (20) nach einem der Ansprüche 1 bis 23 zur Isolierung eines Tieftemperaturbehälters (14) eines Raumfahrzeugs oder Luftfahrzeugs.

33. Trägerrakete, **dadurch gekennzeichnet, dass** sie mit mindestens einer Tieftemperaturisoliervorrichtung (20) nach einem der Ansprüche 1 bis 23 ausgestattet ist.
